Europäisches Patentamt

European Patent Office

Office européen des brevets

(19)

(11) Publication number: 0 430 010 A2

# EUROPEAN PATENT APPLICATION

(21) Application number: 90122072.3

(22) Date of filing: 19.11.90

(51) Int. Cl.⁵: H04M 9/02, H04M 19/00

(30) Priority: 23.11.89 IT 2249889

(43) Date of publication of application:
05.06.91 Bulletin 91/23

(84) Designated Contracting States:
AT BE DE ES FR NL Bulletin

(71) Applicant: ALCATEL N.V.
Strawinskylaan 341
NL-1077 XX Amsterdam(NL)

(72) Inventor: Montesi, Vittorio
Via Libertà, 56
I-20019 Settimo Milanese(IT)
Inventor: Stefanoni, Ennio
Via Liberazione, 11
I-20060 Mediglia Milanese(IT)

(74) Representative: Weinmiller, Jürgen et al
Lennéstrasse 9 Postfach 24
W-8133 Feldafing(DE)

(54) Device for transmitting speech signal, signalling and feed over a single pair of conductors in intercommunicating subsets.

(57) The present invention is directed to the field of control and feed devices for communication networks and refers specifically to a device for transmitting over a single pair of conductors speech signal, signalling and feed in intercommunicating subsets. Such device comprises, on a single pair of conductors, a DC power supply as well as a supply voltage-stabilizer circuit for each subset of the intercom system, and corresponding bidirectional band-pass filters operating both for receive and transmission signals, said DC power supply having a low output impedance for speech signals, whereas said stabilizer circuit has a high input impedance towards speech signals and a low output impedance for DC supply, so that a single pair of conductors both for speech, signalling and feed of the subsets forming the intercommunicating system, may be used.

FIG. 1

EP 0 430 010 A2

# DEVICE FOR TRANSMITTING SPEECH SIGNAL,SIGNALLING AND FEED OVER A SINGLE PAIR OF CONDUCTORS IN INTERCOMMUNICATING SUBSETS.

The present invention relates to a device for transmitting speech signal, signalling and feed over a single pair of conductors in intercommunicating subsets.

As known, in the communication field and more specifically in the branch of intercommunicating systems using intercommunicating subsets, there is the problem of feeding such subsets, transmitting and receiving speech signals, as well as transmitting and receiving signalling data for the intercommunicating system itself.

All these needs impose that a communication channel adapted to satisfy each demand is provided.

However each of such channels, normally represented by a pair of conductors, must have particular features for the specific type of signal travelling thereon.

In fact, the feed of the intercommunicating subsets may be provided by single subscriber network power supplies or by means of a single centralized power supply delivering the electric power through a proper pair of conductors to each intercommunicating subset.

The intercommunicating channel for speech signals must be, on the other hand, a low-frequency channel namely between 300 and 3400 Hz.

On the contrary, the signalling channel, that is the pair of conductors over which the signalling data are transmitted, must be a channel whose working frequency is greater or equal to 30 KHz.

At the present state of the art, a pair of conductors is still used to satisfy each of such needs, i.e. a pair of conductors for low-frequency speech signals, a pair of conductors for intercommunicating equipments system signalling data with a frequency higher or equal to 30 KHz, as well as a pair of conductors for DC feeding all the intercommunicating subsets.

In other types of solutions, speech and signalling are concentrated on a single pair of conductors, whereas the pair of conductors for DC feed is left apart.

However, such solutions have functional and manufacturing limitations. In fact,having several pairs of conductors for each kind of need leads to a complex and expensive installation of the intercommunicating key system besides reducing the reliability because of an increasing in the contact elements.

Moreover, if a DC power supply capable of satisfying the above needs is to be used, it should be a power supply having an output with mainly inductive characteristic which, in the conventional embodiments used today, may consist of an inductor which is physically represented by a copper coil wound on a ferromagnetic core.

But such a solution is not the best one, since the inductor should have very large sizes and therefore cannot be be housed in usual intercommunicating subsets,where compactedness represents one of the essential and priority elements.

Moreover, from a DC voltage regulation viewpoint it is necessary that any change in the voltage outcoming the stabilizer is recovered in a very short time; normally such time should be lower than 25-30 milliseconds.

This is due to the fact that the supply voltage feeded to the intercommunicating subset should be as stable as possible, so that fluctuations of the load current are not sensed.

From the foregoing it is clear that the aforementioned solutions have some limitations which prevent a complete and easy use of the three necessary components for an intercommunicating key-system.

More in detail, it is evident that, if a pair of conductors for each kind of signalling and feeding is not used, it is necessary to adopt solutions which, in the conventional technique, present manufacturing and functional limitations.

The main object of the present invention is to eliminate the above-mentioned drawbacks relatively to systems and devices used at the present time, by providing a device for transmitting speech signal, signalling and feed over a single pair of conductors in intercommunicating subsets in which it is possible to use a single loop in an easy and economical way, namely a single pair of conductors among several intercommunicating subsets of a same system in order to comply with the need of delivering DC feeding for the network of intercommunicating subsets, to send and receive the speech necessary for internal communications, as well as signalling data for controlling the intercom system itself, so that to save not only two conductor pairs, but also to make the intercommunicating key system more compact and functional.

This object and other yet,which will become more apparent from the following description, are achieved according to the present invention by a device for transmitting speech signal, signalling and feed over a single pair of conductors in intercommunicating subsets, characterized in that it includes, on said conductor pair, a DC power supply having a low output impedance towards DC component of the power supply and a high output impedance towards speech signals, and inside each intercommunicating subset it includes a feeding voltage stabilization circuit for each intercommunicating subset having a high input impedance towards speech signals and a low output impedance towards DC feeding, each subset being coupled to said conductor pair both for speech signals and signalling through corresponding bidirectional band-pass filters for receive and transmission.

Other features and advantages of the invention will result better from the detailed description of a preferred but not exclusive embodiment of a device for transmitting speech signal, signalling and feed over a single pair of conductors in intercommunicating subsets taken in conjunction with the attached drawings, given as an indicative but not limitative example, in which :

-figure 1 shows a schematic block diagram of the device according to the present invention in the ambit where it operates;

-figure 2 represents a block diagram in which the circuit portion related to the feeding of the device, according to the present invention, is evidenced by a dashed line;

-figure 3 shows, surrounded by a dashed line,the circuit portion related to the stabilizer circuit according to the present invention.

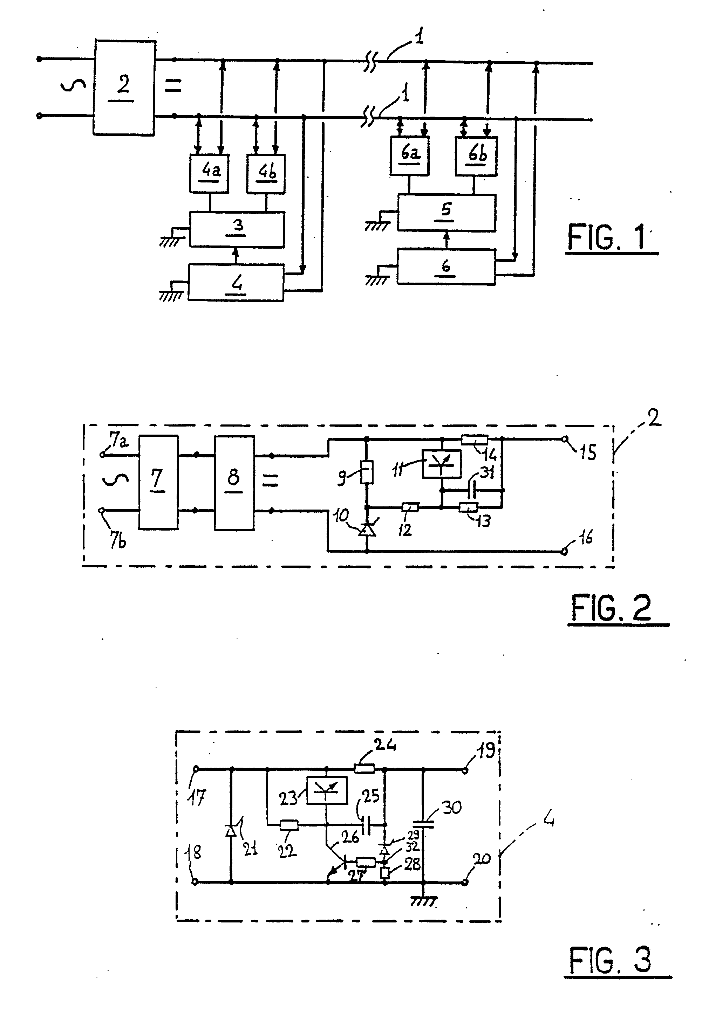

Referring now to figure 1, reference numeral 1 stands for a pair of conductors for intercommunicating subsets, at whose one end is a feed block 2 with an AC input and a DC output.

The intercommunicating subsets of an intercommunicating key system are evidenced on the pair of conductors 1 and represented by subsets 3 and 5.

Obviously, any plurality of intercommunicating subsets can be connected to such pair of conductors.

Such subsets are circuitally connected with the pair of conductors 1 through the band-pass filters 4a and 4b and are feeded by a stabilizer circuit represented by the block 4.

Similarly, as concerns the other n.th subset indicated at 5,it is connected to and feeded by the pair of conductors 1 through band-pass filters 6a and 6b while feeding is stabilized by the stabilizer circuit 6.

Obviously this is a simplified schematization but the plurality of subsets may be of any amount, as said previously.

In figure 2, reference numeral 7 stands for a network transformer at whose inputs 7a and 7b the network AC power is feeded.

At the output of network trasformer 7 is a rectifier bridge 8, at whose output a DC voltage is present.

Eventually, but this is not shown in the figure, a series of stabilizer capacitors may be connected at the output of the rectifier bridge in order to stabilize the output voltage.

The circuit represented by resistors 9,12,13 and 14, the Zener diode 10, the capacitor 31 and the set of transistors indicated at 11, represents an equivalent circuit simulating an inductance.

At the output of terminals 15 and lb there is a DC voltage in such a way that speech signals and signalling, travelling over the same line, are not attenuated.

Figure 3 shows a stabilizer circuit at whose inputs 17 and 10 is a DC voltage, which includes, at its input, a Zener diode acting as a protection against eventual overvoltages. Just after the Zener diode is a circuitry represented by resistors 22,24 and 27, by a set 23 of series transistors, as well as by transistor 26, the capacitor 25, and another resistor 28 and Zener diode 29, while the circuit loops via a capacitor 30, and at the output terminals 19 and 20 is an output voltage feeding a single subsequent subset of the intercommunicating key system.

After a description in structural terms, the operation of the device, in its circuit context where it operates, according to the present invention, will be illustrated in the following.

Firstly,it should be pointed out that the band-pass filters 4a and 4b, as well as 6a and 6b, act as bidirectional band-pass filters for speech signals and signalling ones, both for transmission and receive.

In fact, the filters related to signals, i.e. 4a and 6a, must have a low impédance in the range of 300-3400 Hz, whereas a high impedance for direct current and frequencies over 3400 Hz.

Filters related to signalling data, i.e. 4b and 6b, must have on the contrary a low impedance towards the transmission signal and a high impedance towards speech and DC feed.

Such filters, as said before, are bidirectional band-pass filters and are active both in transmission and receive sense; moreover they carry out obviously the connection function between each subset and the pair of conductors 1.

From a manufacturing viewpoint the former filters, i.e. 4a and 6a, may be represented by an inductance with a series capacitor in order to limit and block the DC component, while the filters 4b and 6b may be represented by a circuit resonating at the effective signalling frequency, consisting of an inductance and a capacitance.

Referring now to figure 2, it is evident that such power supply is a network power supply whose main feature is a mainly inductive characteristic at the terminals 15 and 16, a low DC resistance, namely less than 10 ohm, and a high impedance over 10 kohm for signals between 300 Hz and 100 KHz.

According to such features, both the speech signals and the signalling ones transmitted over the pair of conductors 1 are not attenuated by the circuit at the output of the power supply itself.

In such power supply, as mentioned before, the circuit is represented essentially by the Zener diode 10, the resistors 9,12,13 and 14, as well as by capacitor 31 and by the set of series transistors 11; it represents and simulates a pure inductance.

Indeed, from a circuit viewpoint, the equivalent inductance may be represented by the product: resistor 12 x resistor 14 x capacitor 31.

While the DC output resistance practically is equal to resistor 14, the Zener diode 10, biased through resistor 9, allows to eliminate the residual ripples of the network around 100 Hz.

Such a circuit configuration carries out the same functions of a big coil wound around a ferromagnetic core, but on the contrary it is very compact and can be dimensioned each time according to the required dimensional and circuit features.

In this way, such AC/DC power supply presents a low output impedance towards DC whereas a high output impedance towards signals having a frequency over 300 Hz, namely it has a low impedance towards DC component of the power supply and a high output impedance towards speech signals, so that speech signals and signalling ones are not attenuated, as said hereinbefore,and this thanks to the output circuit of the power supply 2 itself.

Referring now to figure 3, the stabilizer circuit 4 which is equivalent to that one indicated at 6 and to all others eventually present in an intercommunicating key system, has the particular feature of assuring a constant output voltage as a function of the changes of load current and input voltage which may vary within fixed limits.

In fact, the output voltage between the terminals 19 and 20, when rising over an eventual expected design value, increases also the input voltage to Zener diode 29 and therefore increases also the base current of transistor 26. As a consequence, the collector current of the same transistor increases and thus the bias current of the set of series transistors 23 decreases so that the load current outgoing the terminal 19 decreases until the required output voltage between the terminals 19 and 20 is restored.

On the contrary, when this voltage between the output terminals 19 and 20 decreases, the collector current of transistor 26 decreases, thereby the bias current of the set of series transistors 23 increases and thus the output current at the terminal 19 decreases until the output voltage between the terminals 19 and 20 is restored.

In such manner the output voltage from the stabilizer circuit is stabilized at a rate equal to or less than 20 milliseconds.

Moreover, even such a circuit presents at its output an equivalent inductance represented by the product: resistors 22 x resistor 24 x capacitor 25.

The capacitor 30 eliminates the sudden changes of load whereas the Zener diode 21 protects against eventual input overvoltages.

In such way this circuit stabilizes the voltage used for feeding each intercommunicating subset since it has a high input impedance towards frequency signals over 300 Hz, while it has a low output impedance towards DC supply, so as to meet the desired requirements, since in this way it offers a high input impedance towards speech signals and a low output impedance towards DC supply.

Thus the invention achieves the proposed objects, since a single pair of conductors may be used to satisfy the three demands existing in intercommunicating key systems,i.e. DC supply, speech signals transmission and receive,as well as receive and transmit of signals needed for the operation of the intercom system allowing to use a single pair of conductors so that speech and signalling are not interfered or disturbed even if signals run over the same conductor.

In summary, each of the subsets 3 and 5, as indicated in figure 1, allows to use a single pair of conductors 1 through the respective filters 4a and 4b, 6a, 6b by receiving the feed from the power supply 2 featuring a characteristic inductance at its output and havings its own supply voltage stabilized through the circuits 4 and 6,which receive the feed still from the pair of conductors 1, but provide this feed stabilized at the output, for slight oscillations and with very high intervention rates, directly to each subset 3 and 5.

Obviously further changes, structural and parametric modifications are also possible all falling within the inventive sphere.

**Claims**

1) Device for transmitting speech signal, signalling and feedover a single pair of conductors in intercommunicating subsets,characterized in that, on said pair of conductors,it comprises a DC power supply having a low output impedance towards DC component of the power supply and a high output impedance towards speech signals and, inside each intercommunicating subset,it comprises a feeding voltage stabilizer circuit for each intercommunicating subset, having a high input impedance for speech signals and a low output impedance towards DC feeding, each subset being coupled to said pair of conductors both for speech signals and signalling through corresponding bidirectional

EP 0 430 010 A2

band-pass filters for receive and transmission.

2) A device according to claim 1, characterized in that said DC power supply consists of a network transformer, coupled to a rectifier bridge at whose output is connected a circuitry which simulates such an inductance to have a low output impedance towards DC component of the power supply and a high output impedance for speech signals.

3) A device according to claim 2, characterized in that said circuitry simulating an inductance consists of a circuit network, where a Zener diode elimitating frequency oscillations and a first resistor are inserted for closing a rectifier bridge output, the input of the Zener diode representing one of the two output terminals of said DC power supply, whereas the other terminal consists of the endpoint of a parallel circuit which, starting from the ends of said first resistor, extends along a second resistor which loops on the other end of the first resistor, through a pair of series transistors, whereon a second parallel circuit, represented by a third resistor in parallel with a capacitor and by a fourth resistor, loops, the DC output voltage being present across said two terminals.

4) A device according to claim 1, characterized in that said supply voltage stabilizer circuit of the intercommunicating subsets consists of a circuitry at whose input terminals a Zener diode is connected for protection, at who se output ends there are a parallel circuit formed by a resistor, a set of transistors in cascade and a resistor-capacitor circuit in series, such parallel circuit being in series with another transistor, whose emitter loops on the input side of the Zener diode, whereas the base thereof presents at the input a resistor from whose other end another resistor looped on the input of the Zener, and another Zener diode whose output loops on the series resistor-capacitor of the first parallel circuit are branched, a side of said parallel circuit representing thus an extremity therefrom a capacitor is branched, the end of this capacitor being grounded at the emitter side of the third transistor and representing, together with said other end, the output terminals of said stabilizer circuit.

5) A device for transmitting on a single pair of conductors speech signal, signalling and feed in intercommunicating subsets according to what herein described and illustrated for the proposed objects.

FIG. 1

FIG. 2

FIG. 3